# EUROPEAN PATENT APPLICATION

(11) **EP 4 487 984 A1**
(43) Date of publication of application: **08.01.2025**
(21) Application number: 23713699.9
(22) Date of filing: 24.02.2023
(51) Int. Cl.: B23D 59/02, B27G 19/04, B28D 1/04, B28D 7/02

(54) **COOLED CUTTING SYSTEM, METHOD FOR COOLING THE CUTTING DISC OF SAID CUTTING SYSTEM AND CUTTING DEVICE**

(30) Priority: 03.03.2022 EP 22382197
(71) Applicant: KEIBARAN SYSTEM, S.L., 20600 Eibar (ES)
(72) Inventor: GARCIA MARTIN, Isidoro, 20600 EIBAR (GIPUZKOA) (ES)
(74) Representative: Igartua, Ismael
(86) International application number: PCT/ES2023/070100
(87) International publication number: WO 2023/166233

(57) **Abstract**

The invention relates to a cooled cutting system (1) comprising a rotating cutting disc (2) coupled to a cutting tool (11) of a cutting device, and a cooling device for cooling said cutting disc (2) when it is in use. The cooling device comprises an upper covering (3) covering at least part of the cutting disc (2) and a lower base (4) comprising a main slot to allow the passage of a segment of the cutting disc (2), at least part of said lower base (4) being configured for being supported on a piece to be cut (6). The lower base (4) cooperates with the upper covering (3) to form a cavity (7) housing the cutting disc (2). The cooling device also comprises cooling means that enable at least part of said cavity (7) to be filled with a coolant, such that at least part of the cutting disc (2) is submerged in said coolant during the cutting process, said coolant being discharged from the cavity (7) through the main slot of the lower base (4).

## Description

### TECHNICAL FIELD

The present invention relates to cooled cutting systems comprising a rotating cutting disc and cooling means for cooling said cutting disc. The invention also relates to cutting devices comprising said cooled cutting system, as well as to the method for cooling the cutting disc of the cutting system.

### PRIOR ART

Conventional cutting methods use cutting discs, for example a saw disc or a diamond disc, which rotate at a high speed to make cuts in pieces, which can be pieces of various materials such as, for example, wood, stone, porcelain, marble, etc. The cutting discs can be coupled to a handheld, i.e., portable, cutting tool in which the piece to be cut is immobile, and the cutting disc moves longitudinally, driven by the user to make the cut, such as for example a grinder, an angle grinder, or a handheld circular saw. Tools of this type are usually of such a size that they can be easily transported and handled by the user and, therefore, are suitable for use *in situ* anywhere their use may be required. Moreover, cutting discs can also be coupled to more complex work tools in which the cutting disc is immobile, and the piece to be cut is moved to make the cut, such as for example grinders, abrasive grinders, saws, etc. In this case, the movement of the piece to be cut can also be driven by the user manually or by means of automatic systems. Tools of this type are usually large sized and are fixed in workshops or specific work areas.

In order to achieve a clean cutting of edges and to prevent the cutting tool holding the cutting disc (whether handheld or fixed) from overheating, the cutting area must be lubricated during the cutting process, cutting area being understood to mean the point of contact between the cutting disc and the piece to be cut. Depending on the material of the piece to be cut, cooling will be extremely important to achieve the desired cutting quality.

In this sense, US4782591 B2 describes a cooled cutting system coupled to a handheld cutting tool. The cutting system comprises a rotating cutting disc coupled to the cutting tool and a cooling device for cooling the cutting disc during the cutting process. The cutting tool comprises an upper covering partially covering the cutting disc to protect the user during the cutting process, and a lower base supported on the piece to be cut and comprising a main slot to allow the passage of a segment of the cutting disc. The cooling system comprises two elongated conduits arranged on the lower base and connectable with a water supply, with one conduit being arranged on each side of the cutting disc. Each conduit comprises outlet openings for directing the water to the cutting area.

US4022182A describes a cooled cutting system comprising a rotating cutting disc and a cooling device for cooling the cutting disc when it is in use. The cooling device comprises an upper covering covering part of the cutting disc and a lower base comprising a main slot to allow the passage of a segment of the cutting disc. The lower base cooperates with the upper covering to form a cavity, housing the cutting disc. The cooling device also comprises cooling means to spray the cutting disc with water during the cutting process and suction means to remove the sprayed water and the debris generated during the cutting process. In the bottom of the cavity there are cutouts to allow air to enter the cavity prior to being evacuated by a discharge tube connected to the suction means. The introduced air also performs the function of gathering loose particles and chips to evacuate them through the discharge tube.

### DISCLOSURE OF THE INVENTION

One object of the invention is to provide a cooled cutting system as defined in the claims.

The cooled cutting system of the invention comprises a rotating cutting disc and a cooling device for cooling said cutting disc when it is in use. The cooling device comprises an upper covering covering at least part of the cutting disc and a lower base comprising a main slot to allow the passage of a segment of the cutting disc, at least part of said lower base being configured for being supported on a piece to be cut. The lower base cooperates with the upper covering to form a cavity housing the cutting disc. The cooling device also comprises cooling means that enable at least part of said cavity to be filled with a coolant, the cooling device being configured to retain and accumulate the coolant inside the cavity to form a volume of coolant, such that at least part of the cutting disc is submerged in said volume of coolant during the cutting process.

Another object of the invention is to provide a method for cooling the cutting disc of said cutting system as defined in the claims.

In the method of the invention, the cavity formed by the lower base and the upper covering of the cooled cutting system of the invention is at least partially filled with a coolant through the cooling means, said coolant being discharged from the cavity through the main slot of the lower base.

Another object of the invention is to provide a cutting device as defined in the claims.

The cutting device of the invention comprises a frame configured for being fixed to a reference surface. A cutting tool moves over the frame, in which the cooled cutting system of the invention is coupled, such that a cutting channel is generated in the piece to be cut as the cutting tool is guided forward in the frame according to the rotational direction of the cutting disc of the cutting system.

Cooling of the cutting disc during the cutting process is improved with the cooled cutting system, the cutting device, and the method of the invention, which has a positive impact on the cutting quality of the piece, particularly in extremely hard materials such as, for example, synthesized ceramic, a clean cut without burrs being achieved in the pieces to be cut.

Likewise, as a result of the cooling device of the cooled cutting system it is possible to control the coolant so that it does not project out during the cutting process, thereby preventing splashing which could lead to a dirty work environment. Furthermore, in addition to performing its main function, i.e., cooling the cutting area, said coolant becomes a fluid carrying particles detached from the piece to be cut during the cutting process, even microscopic particles suspended in air in a nebulization generated during the cutting process. When potentially carcinogenic synthetic materials such as compact quartzes, which contain a high percentage of crystalline silica, for example, are cut, the particles detached from said material during the cutting process are harmful and may be inhaled by the user, which is extremely harmful to the user's health. As a result of the cooled cutting system of the invention, both the nebulization and the detached harmful particles suspended in said nebulization are retained in the cavity of the cooling device and discharged in a controlled manner through the cutting slot of the cooled cutting system of the invention, therefore preventing said harmful particles from being inhaled by the user, thereby contributing to improving user safety.

Moreover, given that the cutting tool is still just an electric tool, it also contributes to improving electrical safety since the tool remains clean and dry, preventing moisture and short-circuiting issues.

These and other advantages and features of the invention will become apparent in view of the figures and detailed description of the invention.

### DESCRIPTION OF THE DRAWINGS

Figure 1 shows a perspective view of a cutting device incorporating a cooled cutting system according to one embodiment of the invention.
Figure 2 shows a perspective view of a cutting device according to another embodiment of the invention.
Figure 3 shows a perspective view of part of the cooled cutting system coupled to the cutting tool of the cutting device of Figure 1 with the piece to be cut.
Figure 4 shows an exploded view of the cooled cutting system of Figure 3.
Figure 5 shows a sectioned perspective view of the lower base of the cooled cutting system of Figure 3.
Figure 6 shows an exploded view of the frame and the holding means of the cutting device of Figure 1 and the plinth and the containment bars of the cooled cutting system of Figure 1.

### DETAILED DISCLOSURE OF THE INVENTION

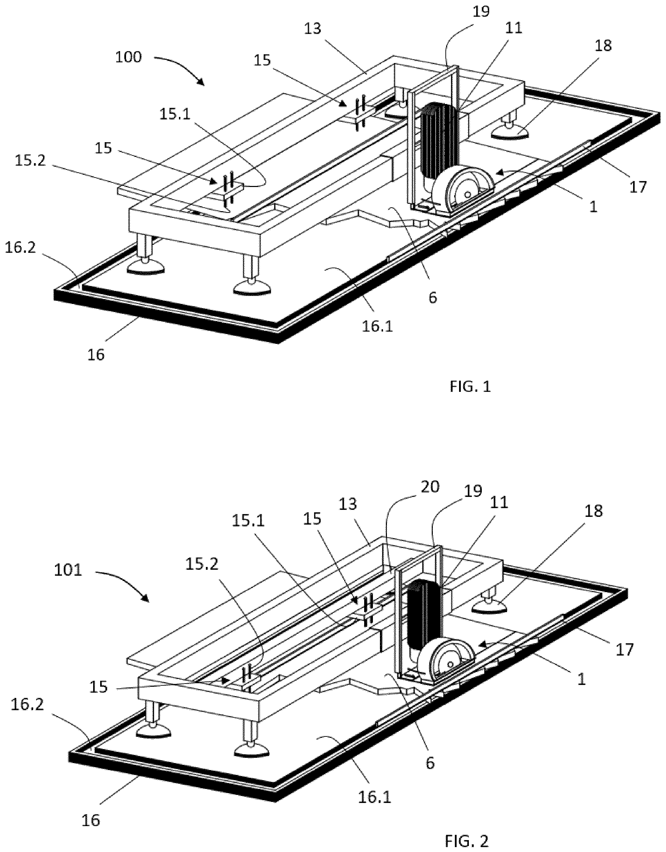

Figure 1 shows a non-limiting embodiment of the cutting device 100 according to the invention.

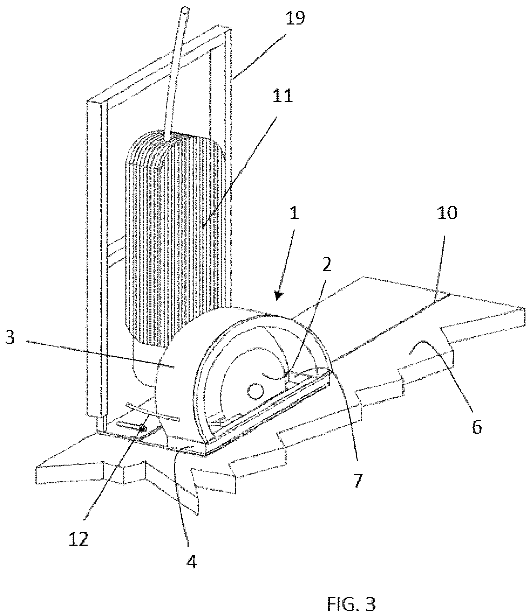

Said cutting device 100 comprises a frame 13 configured for being fixed to a reference surface where a piece to be cut 6 is also usually supported. A cutting tool 11 moves in a guided manner on one side of the frame 13, with a cooled cutting system 1 being coupled to said cutting tool 11 such that as the cutting tool 11 is guided forward in the frame 13 in a forward movement direction parallel to the translational direction of the cutting disc 2 of the cutting system 1 according to the rotational direction of the disc 2 (if the latter is able to slide), a cutting channel 10 is generated in the piece to be cut, as can be seen in Figure 3.

In a non-limiting example of the invention, the cutting tool 11 of the cutting device 100 is a portable, commercial tool. The frame 13, being preferably rectangular, comprises a guide 19 in which the cutting tool 11 can be fixed. Said guide 19 moves on one side of the frame 13, and furthermore, the cutting tool 11 is also allowed to move in the guide 19 itself in a direction perpendicular to the forward movement direction to allow the cutting tool 11 to be closer to or away from the piece to be cut 6.

The dimensions of the frame 13 can vary to in order to be adjusted to different sizes of pieces to be cut 6, the frame 13 being telescopic, for example, or possible being formed by different segments that are added or removed, as needed.

The frame 13 comprises holding means 18, for example suction cups arranged on legs enabling the frame 13 to be raised, which allow the frame 13 to be fixed to the reference surface. The reference surface may be any flat surface that can be used as a support for the piece to be cut 6, for example a table.

The cooled cutting system 1 according to the invention comprises a rotating cutting disc 2 and a cooling device for cooling said cutting disc 2 when it is in use, i.e., during the cutting process. The cooling device comprises an upper covering 3 covering at least part of the cutting disc 2 and a lower base 4 comprising a main slot 5 to allow the passage of a segment of the cutting disc 2, at least part of said lower base 4 being configured for being supported on the piece to be cut 6. The lower base 4 cooperates with the upper covering 3 to form a cavity 7 housing the cutting disc 2.

The cooling system also comprises cooling means that enable at least part of said cavity 7 to be filled with a coolant, not shown in the drawings for the sake of clarity, for example water, such that at least part of the cutting disc 2 is submerged in said coolant during the cutting process.

In the method for cooling the cutting disc 2 of the cooled cutting system 1 of the invention, the cavity 7 formed by the lower base 4 and the upper covering 3 is at least partially filled with the coolant through the cooling means, as will be described in detail below, said coolant being discharged from the cavity 7 mainly through the main slot 5 of the lower base 4. The discharged coolant will then flow to the cutting channel 10 generated in the piece to be cut 6 during the cutting process, as will be described in detail below.

With the cooled cutting system 1 of the invention, cooling of the cutting disc 2 during the cutting process is improved, which has a positive impact on the cutting quality of the piece 6, particularly in extremely hard, such as, for example, synthesized ceramic, a clean cut, i.e., without burrs, being achieved in the pieces to be cut 6. During the cutting process, the cutting disc 2 comes into contact with the piece to be cut 6, a groove being generated in the piece 6 which will give rise to the cutting channel 10 as the cutting tool 11 is guided forward by the frame 13. If the cutting tool 11 did not collaborate with the frame 13, i.e., if it were not arranged in the cutting device 100 of the invention, the user would have to hold the cutting tool 11 while moving it to generate the cutting channel 10. However, by using the cutting device 100 of the invention the cutting channel 10 made is completely straight because the cutting channel 10 is parallel to the side of the frame 13 through which the cutting tool 11 slides. Therefore, the cutting device 11 of the invention facilitates handling of the cutting tool 11, which favors the user's work and the cutting quality.

During the cutting process, the temperature of the cutting disc 2, and hence the temperature of the piece to be cut 6 as well, increases considerably, even possibly blunting the cutting disc 2 and, therefore, ruining the piece to be cut 6. Therefore, it is very important to cool the cutting disc 2 during the cutting process. In this sense, as a result of the cooling device of the cooled cutting system 1 of the invention, it is possible to control the coolant so that it does not project out during the cutting process, thereby preventing splashing which could lead to a dirty work environment.

In addition to performing its main function, i.e., cooling the cutting area, the coolant becomes a carrier of particles detached from the piece to be cut 6 during the cutting process, even microscopic particles suspended in air in the nebulization generated during the cutting process. In cutting processes with a coolant, for example water, a type of mist (nebulization) is usually generated around the cutting area.

When potentially carcinogenic synthetic materials such as compact quartzes, which contain a high percentage of crystalline silica, for example, are cut, the particles detached from said material during the cutting process are harmful and may be inhaled by the user, which is extremely harmful to the user's health. As a result of the cooled cutting system 1 of the invention, both the nebulization and the detached particles suspended in said nebulization, such as carcinogenic particles, for example, are retained in the cavity 7 of the cooling device and discharged in a controlled manner through the main slot 5 of the cooled cutting system 1, therefore preventing said harmful particles from being inhaled by the user, improving user safety.

Moreover, given that the cutting tool 11 is still just an electric tool, it also contributes to improving electrical safety since the tool 11 remains clean and dry, preventing moisture and short-circuiting issues.

The cutting device 100 of the invention can also be transported to the place where the piece to be cut 6 is located, whether in a specific workshop, in building sites or in a particular home, without giving up portability of the cutting tool 11 itself.

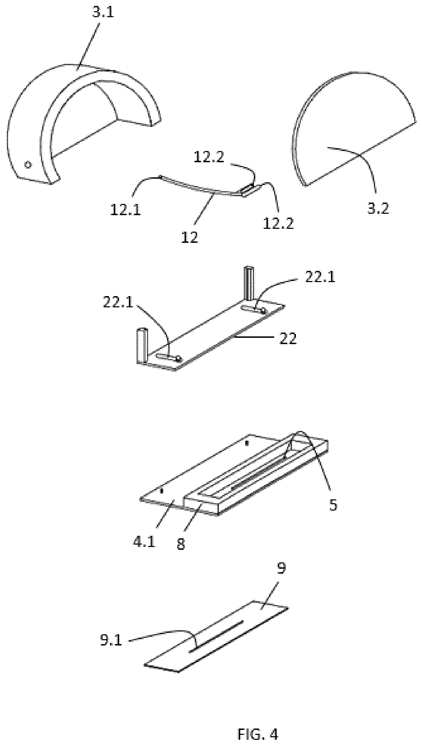

In a first embodiment of the cooled cutting system 1 of the invention, the lower base 4 comprises a support 4.1 and a containment wall 8 extending from said support 4.1 to the upper covering 3 surrounding the main slot 5. The containment wall 8 collaborates with the upper covering 3 to generate the cavity 7. As can be seen in Figure 4, the support 4.1 is rectangular, although its geometric aspect is not essential for the invention. In this first embodiment, the upper covering 3 must simply be supported on the support 4.1 but inside the containment wall 8 in order to generate the cavity 7, i.e., the containment wall 8 is superimposed on the periphery of the free end of the upper covering 3, as can be seen in Figure 3. The coolant is retained by the containment wall 8 and by at least part of the support 4.1 forming a volume of coolant inside the cavity 7, i.e, the coolant accumulates inside the cavity 7 and achieves a working level, for example, a height near the height of the containment wall 8, so that being the cutting disc 2 in use, at least part of the disc 2 is submerged in said volume of coolant, while the coolant projected by the cutting disc 2 during the cutting process is retained inside the cavity 7 avoiding the splash of the coolant. The coolant therefore, is only discharged from the cavity 7 through the main slot 5. The main slot 5 is as small as possible to allow the disc to pass through and therefore to provide a good base for coolant to accumulate inside the cavity 7 to form the volume of coolant. This embodiment is suitable for working horizontally, i.e., with the piece to be cut 6 being arranged horizontally, just like the inner base 4 since it is supported on the piece 6. That being the case, the segment of the cutting disc 2 submerged in coolant corresponds with a segment close to the cutting area, cutting area being understood to mean the point of contact between the cutting disc 2 and the piece to be cut 6. In this embodiment, the recommended level of coolant in the cavity 7 during the cutting process corresponds with the height of the containment wall 8, but logically this will depend on the user. Due to the volume of coolant, it is not necessary that cooling means are continuously projecting coolant inside the cavity 7. When the level of the volume of coolant drops below a safe height, the cooling means may refill the cavity 7 with the coolant until the coolant reaches the desired working level again.

The upper covering 3 according to this first embodiment of the cooled cutting system 1 comprises a flexible main body 3.1, for example made of a foam material, and a transparent front cover 3.2, preferably being also rigid, for example made of polycarbonate, in order to observe the inside of the cavity 7. The flexible main body 3.1 also covers the rear part of the cutting disc 2 and allows being better fitted and adjusted to the cutting tool 11, i.e., to the shaft where the cutting disc 2 is coupled, to form the cavity 7. As the cavity 7 is not intended to be completely filled with the coolant, it would not be necessary to use sealing gaskets between the upper covering 3 and the cutting tool 11; however, their use is not ruled out. In Figure 4, the rear wall of the main body 3.1 has been depicted as if it were a smooth wall in order to better understand the invention, but it evidently must allow being coupled to the shaft of the cutting tool 11 where the cutting disc 2 is mounted.

The main body 3.1 could be coupled to the cutting tool 11 before or after the cutting disc 2 is mounted. If it is placed before the cutting disc 2, the rear wall of the main body 3.1 may comprise a housing to allow the passage of the shaft of the cutting tool 11 where the cutting disc 2 is mounted. However, in order to place the main body 3.1 with the cutting disc 2 mounted in the cutting tool 11, the rear part of the main body 3.1 may comprise a slot in the rear part to allow skirting the shaft of the cutting tool 11 where the cutting disc 2 is coupled. In this case, the main body 3.1, particularly the rear part, is designed such that with the main body 3.1 on the cutting disc 2, the rear part comes back together after being separated to skirt the shaft where the cutting disc 2 is coupled.

Optionally, the main body 3.1 may also be elastic.

As ensues from the paragraphs described above, the upper covering 3 of the cooled cutting system 1 of the invention is configured for being coupled or fixed to the cutting tool 11 holding the cutting disc 2, preferably to the shaft where the cutting disc 2 is mounted. Likewise, the support 4.1 of the lower base 4 is also configured for being fixed, although indirectly, to the cutting tool 11 holding the cutting disc 2, preferably being fixed to the guide 19 of the cutting device 100 where the cutting tool 11 is in turn fixed, through a platform 22 fixed to the guide 19 and comprising elongated openings 22.1 which allow the lower base 4 to move closer to or away from the cutting disc 2. Therefore, with both the upper covering 3 and the lower base 4 coupled or fixed to the cutting tool 11 independently, they do not both need to be attached to one another, they must simply collaborate to form the cavity 7.

In a second embodiment of the cooled cutting system 1 of the invention, not shown in the drawings, the lower base 4 and the upper covering 3 are attached to one another such that the cavity 7 formed is leak-tight, logically except for the main slot 5. This embodiment is suitable for working both horizontally, i.e., with the piece to be cut6 arranged horizontally, and vertically, i.e., with the piece to be cut 6 arranged vertically, which may be of interest for cutting pieces 6 stored vertically without having to remove said pieces 6 from their location. Therefore, in this configuration it is possible to rotate the cutting tool 11 with the cooled cutting system 1 coupled thereto, without causing unwanted leakage of the coolant contained in the cavity 7. In this embodiment, both the upper covering 3 and the lower base 4 are made of the same material, preferably transparent and rigid, such as methacrylate, for example, in order to observe the inside of the cavity 7.

In this embodiment, the upper covering 3 may also comprise a main body 3.1 with a rear wall configured for being able to house the shaft of the cutting tool 11 where the cutting disc 2 is mounted and a front cover 3.2. The cavity 7 would be formed once all the parts of the upper covering 3 and the lower base 4 are mounted and fixed to one another around the cutting disc 2. Sealing gaskets could be used in the attachment areas of the different parts to achieve a leak-tight cavity 7. Optionally, the front cover 3.2 and the lower base 4 could form a single part.

In this embodiment, when the cooled cutting system 1 works horizontally, the containment wall 8 could be formed by the walls of the upper covering 3 which are leak-tight attached to the lower base 4. When the cooled cutting system 1 works vertically, the containment wall 8 could be formed by part of the walls of the upper covering 3 and part of the lower base 4.

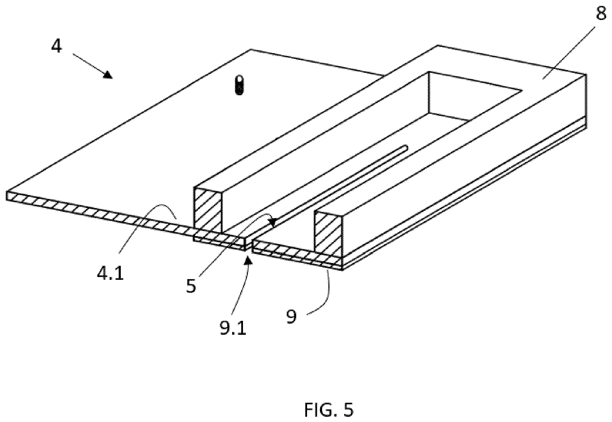

The lower base 4 of the cooled cutting system 1 of the invention also comprises a flat gasket 9 attached to a lower surface of the lower base 4 comprising a secondary slot 9.1, as can be seen in Figure 4, facing the main slot 5 as can be seen in Figure 5 to allow the passage of the segment of the cutting disc 2, such that a leak-tight contact is caused between the piece to be cut 6 and the lower base 4 when said lower base 4 is supported on the surface of the piece to be cut 6. Therefore, when the coolant is discharged from the cavity 7 through the main slot 5 during the cutting process, said coolant is prevented from spreading across the surface of the piece to be cut 6, such that the only path the coolant has to be discharged is to be directed to the cutting channel 10 recently generated in the piece to be cut 6. Once the coolant has reached the cutting channel 10, it is possible for the coolant to spread across the surface of the piece to be cut 6. Optionally, the coolant discharged through the main slot 5 can be collected to keep the area clean and dry, as described in detail below.

In the first embodiment of the cooled cutting system 1 of the invention, the support 4.1 is arranged by way of sandwiching between the containment wall 8 and the flat gasket 9.

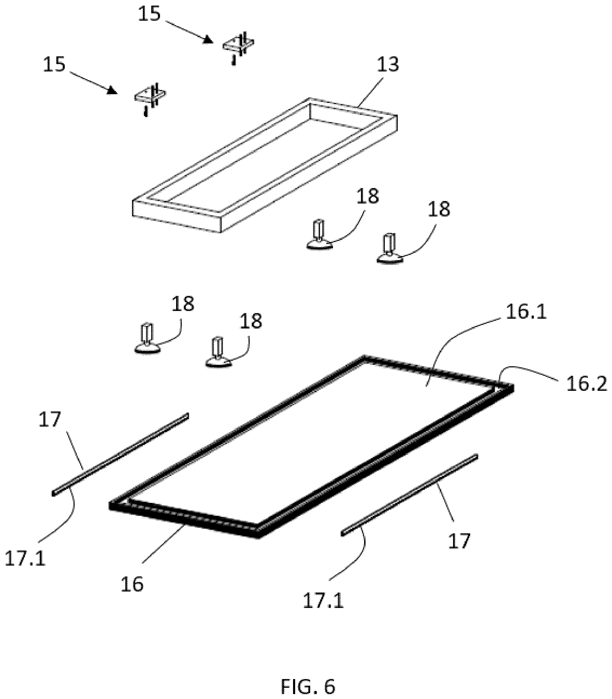

The cooling means of the cooled cutting system 1 of the invention also comprise a plinth 16, shown in detail in Figure 6, comprising a support surface 16.1 where the piece to be cut 6 is supported during the cutting process, as can be seen for example in Figure 1, and a peripheral channel 16.2 surrounding the support surface 16.1 and configured for collecting the coolant discharged from the cavity 7. In a non-limiting example, the plinth 16 is rectangular. The coolant spreading across the surface of the piece to be cut 6 through the cutting channel 10 finally falls onto the support surface 16.1 of the plinth 16 and from there it falls or is removed manually, to the peripheral channel 16.2. Optionally, the peripheral channel 16.2 may comprise a drainage unit, not shown in the drawings, to discharge the coolant from the peripheral channel 16.2. However, after the cutting process, the plinth 16 can be flipped over to dump the coolant into a container, not shown in the drawings, in the absence of the drainage unit.

Optionally, the cooling means of the cooled cutting system 1 of the invention may also comprise a containment bar 17 used if needed, for example, in the case of the piece to be cut 6 extending beyond the dimensions of the plinth 16. Two containment bars 17 would be enough to cover most cases; however, four containment bars 17, one on each side of the plinth 16, may be arranged should the piece to be cut 16 exceed the four sides of the plinth 16.

The containment bar 17 shown in Figure 6 is a rectangular rod, i.e., a rectangular prism, comprising a sealing gasket 17.1 on one side. The sealing gasket 17.1 is placed on the surface of the piece to be cut 6 during the cutting process such that a leak-tight contact is formed between the piece to be cut 6 and the containment bar 17. The containment bar 17 must be strategically placed on the side of the piece 6 that exceeds the plinth 6, i.e., the containment bar 17 must be arranged within the perimeter of the plinth 16. The spread of the coolant scattering across the surface of the piece to be cut 6 through the cutting channel 10 is stopped by the containment bar 17 while at the same time being redirected to the peripheral channel 16.2 of the plinth 16. If the containment bar 17 is placed within the perimeter of the plinth 16 but far from the peripheral channel 16.2, then the coolant stopped by the containment rib 17 will fall onto the support surface 16.1 and from there into the peripheral channel 16.2.

As shown in Figure 1, the support surface 16.1 of the plinth 16 can be used as the reference surface where the frame 13 of the cutting device 100 of the invention is fixed.

The slot cutting 10 generated in the piece to be cut 6 during the cutting process also extends to the surface of the plinth 16, even further improving the cutting quality in the piece to be cut 6. When the support surface 16.1 of the plinth is no longer usable, it can be repaired or simply replaced with a new plinth 16.

The frame 13 of the cutting device 100 of the invention comprises holding means 15 configured for holding the piece to be cut 6 during the cutting process. In the non-limiting example of Figure 1, the holding means 15 comprise two supports 15.1 which can slide over the frame 3 to be adapted to the dimensions of the different pieces to be cut 6. It is advisable to place the two supports 15.1 as far away as possible, but if the piece to be cut 6 is not very large, a single support 15.1 could be used, or if the piece to be cut 6 is very large, more than one support 15.1 could be placed.

Each support 15.1 of the holding means 15 comprises two stops 15.2, although one may be enough, which cooperate with the piece to be cut 6. The stops 15.2 are attached to the support 15.1, preferably by a threaded attachment, such that said stops 15.2 can move closer to or away from the piece 6. When they move closer to the piece to be cut 6, the stops 15.2 exert pressure on the surface of the piece to be cut 6, immobilizing it with respect to the frame 13. The stops 15.2 comprise an elastic end, preferably made of rubber, so as not to damage the surface of the piece to be cut 6.

Optionally, the frame 13 may comprise a crossbar 20 arranged between two sides of the frame 13, as shown in the cutting device 101 of Figure 2, and it can slide transversely to said sides, the holding means 15 being arranged on said crossbar 20, which is advantageous for holding pieces 6 that are not very large.

The cooling means of the cooled cutting system 1 of the invention comprise a conduit 12 going through the upper covering 3, one end 12.1 of the conduit being arranged outside the upper covering 3 and the opposite end inside the cavity 7, as can be seen in Figure 3. The end 12.1 arranged outside the upper covering 3 is configured for being connected to an external source or container containing the coolant (not shown in the drawings) and the end arranged inside the cavity 7 comprises at least one outlet nozzle 12.2 for directing the coolant to the cutting disc 2. In a non-limiting example, the conduit 12 comprises two outlet nozzles 12.2, each one arranged on one side of the cutting disc 2, as can be seen in Figure 4.

## Claims

1. A cooled cutting system comprising a rotating cutting disc (2) and a cooling device for cooling said cutting disc (2) when it is in use, the cooling device comprising an upper covering (3) covering at least part of the cutting disc (2) and a lower base (4) comprising a main slot (5) to allow the passage of a segment of the cutting disc (2), at least part of said lower base (4) being configured for being supported on a piece to be cut (6), the lower base (4) cooperating with the upper covering (3) to form a cavity (7) housing the cutting disc (2), the cooling device also comprising cooling means that enable at least part of said cavity (7) to be filled with a coolant, **characterized in that** the cooling device is configured to retain and accumulate the coolant inside the cavity (7) to form a volume of coolant, such that at least part of the cutting disc (2) is submerged in said volume of coolant during the cutting process.

2. The cooled cutting system according to claim 1, wherein the lower base (4) comprises a support (4.1), preferably rectangular, and a containment wall (8) extending from said support (4.1) to the upper covering (3) surrounding the main slot (5), said containment wall (8) cooperating with the upper covering (3) to generate the cavity (7).

3. The cooled cutting system according to claim 2, wherein the volume of coolant is retained by the containment wall (8) and at least part of the support (4.1).

4. The cooled cutting system according to claim 2 or 3, wherein the lower base (4) also comprises a flat gasket (9) comprising a secondary slot (9.1) facing the main slot (5) to allow the passage of the segment of the cutting disc (2), said flat gasket (9) being attached to a lower surface of the lower base 4, and said flat gasket (9) being configured for being supported on the piece to be cut (6) such that a leak-tight contact is caused between the piece to be cut (6) and the lower base (4).

5. The cooled cutting system according to any of claims 2 to 4, wherein the upper covering (3) is configured for being fixed to a cutting tool (11) holding the cutting disc (2).

6. The cooled cutting system according to claim 5, wherein the support (4.1) of the lower base (4) is also configured for being fixed to the cutting tool (11) holding the cutting disc (2).

7. The cooled cutting system according to any of claims 1 to 6, wherein the upper covering (3) comprises a main body (3.1), preferably made of a flexible material, and a front cover (3.2), preferably made of a rigid and transparent material.

8. The cooled cutting system according to any of claims 1 to 5, wherein the lower base (4) and the upper covering (3) are attached to one another such that the cavity (7) formed is leak-tight except for the main slot (5).

9. The cooled cutting system according to claim 8, wherein the lower base (4) and the upper covering (3) are made of the same material, preferably transparent and rigid material.

10. The cooled cutting system according to any of the preceding claims, wherein the cooling means comprise a conduit (12) going through the upper covering (3), with one end of the conduit (12.1) being arranged outside the upper covering (3) and the opposite end inside the cavity (7), with the end (12.1) arranged outside the upper covering (3) being configured for being connected to an external source or external container containing the coolant, and the end arranged inside the cavity (7) comprising at least one outlet nozzle (12.2) directing the coolant to the cutting disc (2).

11. The cooled cutting system according to any of the preceding claims, wherein the cooling means comprise a plinth (16) comprising a support surface (16.1) where the piece to be cut (6) is supported during the cutting process, and a peripheral channel (16.2) surrounding the support surface (16.1) and configured for collecting the coolant discharged through the main slot (5).

12. The cooled cutting system according to claim 11, wherein the cooling means also comprise at least one containment bar (17), preferably a rectangular prismatic shaped bar, comprising a sealing gasket (17.1) on one side, the sealing gasket (17.1) being arranged on the piece to be cut (6) during the cutting process in the event that the piece (6) is larger than the plinth (16), a leak-tight contact being formed between the piece to be cut (6) and the containment bar (17), said containment bar (17) being configured for redirecting the coolant that may be left on the surface of the piece to be cut (6) during the cutting process to the peripheral channel (16.2) of the plinth (16).

13. A method for cooling a cutting disc of a cooled cutting system according to any of the preceding claims, wherein the cavity (7) formed by the lower base (4) and the upper covering (3) is at least partially filled with the coolant through the cooling means, the coolant being retained in the cavity (7) forming the volume of coolant, the coolant being discharged from the cavity (7) through the main slot (5) of the lower base (4).

14. The method according to claim 13, wherein the coolant discharged through the main slot (5) flows to a cutting channel (10) generated in the piece to be cut (6) during the cutting process.

15. A cutting device, **characterized in that** it comprises a frame (13) configured for being fixed to a reference surface, a cutting tool (11) moving over the frame (13), with a cooled cutting system (1) according to any of claims 1 to 11 being coupled to said cutting tool (11), such that a cutting channel (10) is generated in the piece to be cut (6) as the cutting tool (11) is guided forward in the frame (13) according to the rotational direction of the cutting disc (2) of the cutting system (1).

16. The cutting device according to claim 15, wherein the frame (13) comprises holding means (15) configured for holding the piece to be cut (6) during the cutting process.
